# EUROPEAN PATENT SPECIFICATION

(11) **EP 1 177 924 B1**
(45) Date of publication and mention of the grant of the patent: **14.03.2007**
(21) Application number: 00116518.2
(22) Date of filing: 31.07.2000
(51) Int. Cl.: B60H 1/32, F25B 49/00

(54) **Method and device for testing and diagnosing air conditioning apparatus on vehicles**
Verfahren und Vorrichtung zum Testen und zur Diagnose von einer Kraftfahrzeugklimaanlage
Méthode et dispositif pour tester et diagnostiquer un appareil de climatisation pour véhicules

(43) Date of publication of application: 06.02.2002
(73) Proprietor: North European Patents and Investments H.S.A., Société Anonyme, 1724 Luxembourg (LU)
(72) Inventor: Renders, Marie-Joseph, 1651 Beersel (BE)
(74) Representative: Celestino, Marco

(56) References cited:
- WO-A-98/54019
- FR-A- 2 772 310
- US-A- 5 009 076
- US-A- 5 369 957

## Description

### Field of the invention

The present invention relates to an improved method for testing and diagnosing air-conditioning apparatus on vehicles.

Furthermore the invention relates to a device that carries out this method.

### Background of the invention

Air-conditioning apparatus on vehicles require often servicing by expert staff, who is able to control system breakdown that cannot be easily found, such as a lack or excess of refrigerant, an incorrect setting of the system, failure of the compressor, problems at the capillary valve and at other devices.

Traditionally a conditioning circuit for cars comprises in sequence a compressor, a high pressure warm side with a warm exchanger or condenser, an expansion valve or capillary valve and a low pressure cool side with a cool exchanger or evaporator.

In WO98/54019, in the name of the same applicant, an automatic device is described for testing and diagnosing air-conditioning apparatus on vehicles. This device comprises a sensor of the environment temperature, a low pressure sensor to be located at the cool side, a high pressure sensor to be located at the warm side and a control unit for comparing the values measured by the sensors with respect to fixed values of environment temperature, of low and high pressure. After the comparison, the control unit selects and displays a diagnosis message chosen within a predetermined list.

The device above described, even if normally effective, cannot be used for diagnosis of systems so called "orifice tube system" with or without clutch cycling switch. Moreover, its precision in the diagnosis can be improved.

### Summary of the invention

It is therefore object of the present invention to provide an improved method for testing and diagnosing air-conditioning apparatus that is capable of working with any type of system installed on cars.

It is another object of the invention to provide a improved device that carries out this method.

These objects are achieved by the method according to the present invention that has the characteristic of providing, in addition to measuring the environment temperature and the pressure upstream/downstream the compressor, a measurement of the temperature of the cold air at the exit of the evaporator, and for a predetermined time of diagnosis, sampling the values of the pressures and of the temperatures in a computing unit wherein a program of diagnosis is residing, running the program of diagnosis, according to the characterizing part of claim 1.

This additional value allows the application of the diagnosis method to any conditioning system, comprised the orifice tube systems with or without clutch cycling switch as well as expansion valve systems.

Preferably, an input step is executed of the data concerning the type of conditioning system and a logic of control is provided that calculates the parameters of operation responsive to said input data. Advantageously the input step is carried out by means of a magnetic card that can be inserted at the beginning of the measuring phase.

The device according to the invention, that is capable of carrying out this method, comprises then, in addition to means for measuring the pressure upstream and downstream the compressor and sensors means of the environment temperature, also sensor means of the air temperature coming from the evaporator.

A logic of control is provided that receives as input two values of pressure and two values of temperature, respectively pressure of the conditioning circuit warm and cool sides upstream and downstream the compressor, the environment temperature and the air temperature at the exit from the evaporator. In this control logic algorithms are implemented that display messages of malfunction, which allow to determine quickly the kind of failure, or to display a message of correct operation.

All the principal features of the invention are defined by the independent claims. The dependent claims define the preferred aspects of the invention same.

### Brief description of the drawings

Further characteristics and the advantages of the method and of the device according to the invention will be made clearer with the following description of an embodiment thereof, exemplifying but not limitative, with reference to the attached drawings, wherein:
- Figure 1 is a block diagram of a device for testing and diagnosing air-conditioning systems according to the invention;
- Figure 2 shows a top plan view of a device for testing and diagnosing air-conditioning systems according to the invention having the structure of figure 1;
- Figure 3 is a front view according to arrow III of figure 2;
- Figure 4 is a perspective view of the embodiment of figures 2 and 3;
- figures 5, 6 and 7 show the connection of the embodiment of the previous figures to three different types of conditioning system and respectively an expansion valve system, an orifice tube system with clutch cycling switch and an orifice tube system without clutch cycling switch;
- figures 8 and 9 show the list of diagnosis chosen automatically by the apparatus of figures 1-4 in the case of the orifice tube system with or without clutch cycling switch respectively of figures 6 and 7 and of the expansion valve system of figure 5
- figure 10 is a flow-sheet of the operative steps of the device figure 1.

### Description of a preferred embodiment

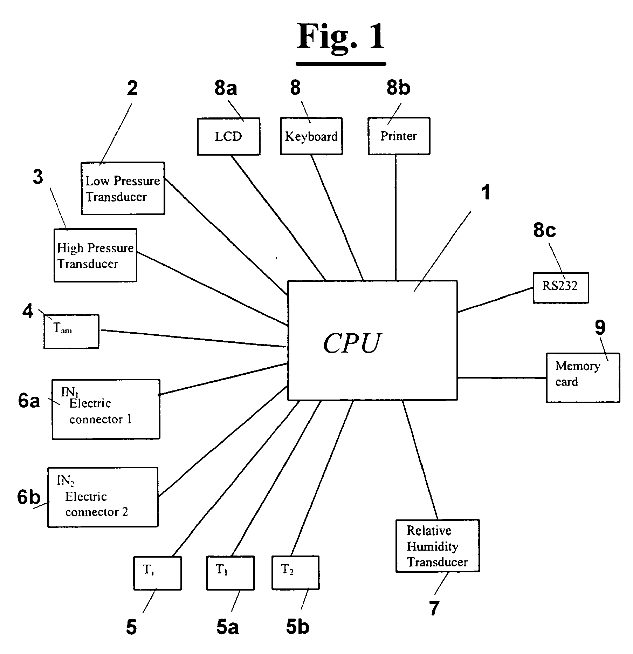

With reference to figure 1 a device for testing and diagnosing a car air-conditioning apparatus comprises:
- a control unit 1, indicated as CPU and based on a microprocessor;
- a first sensor 2 for measuring the low pressure LP upstream the compressor;
- a second sensor 3 for measuring the high pressure HP downstream the compressor;
- a third sensor 4 for measuring the environment temperature Ta;
- a fourth sensor 5 for measuring the temperature Ti at the air outlet in the car;
- sensors of auxiliary temperatures 5a and 5b;
- a couple of connectors 6a, 6b for measuring the voltage at the ends of the clutch cycling switch in the orifice tube systems with clutch cycling switch;
- a sensor of relative humidity 7;
- a data input unit 8, in this embodiment a keyboard;
- a unit 8a for displaying the data in this embodiment a alphanumeric LCD, and/or a printing unit 8b;
- a connector of RS232 type for communicating with a computer;
- a external memory unit 9, in this embodiment a memory card, with relative interface (not shown).

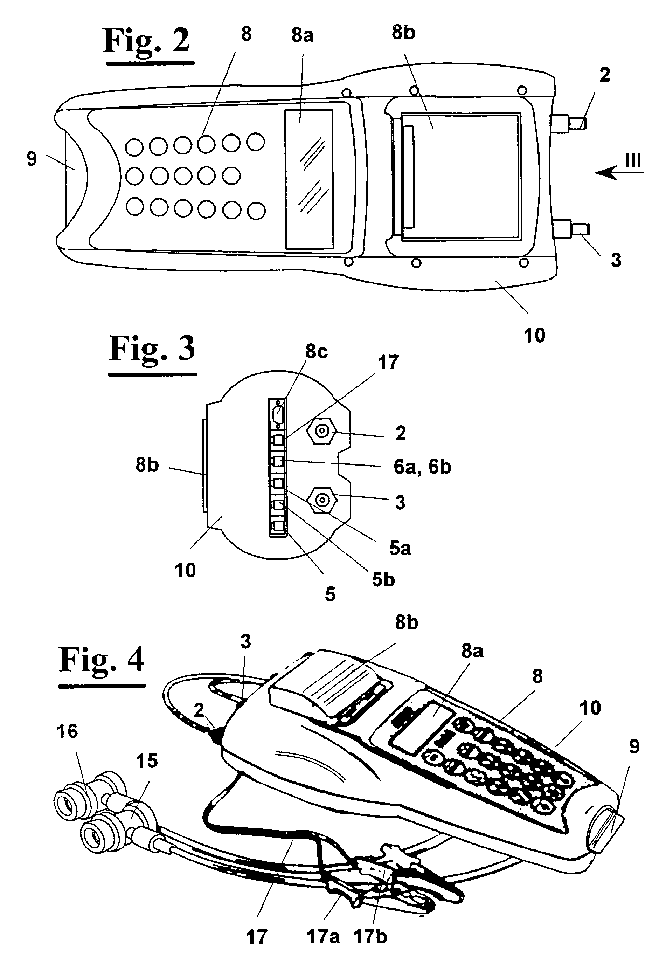

With reference to figures from 2 to 4, a device that implements the structure of figure 1 is indicated with the numeral 10. At the rear side (fig.3) of device 10 the following connections are provided: screw threaded sockets of low pressure 2 and of high pressure 3; connectors for cables of the temperature sensors 5, 5a, 5b; connectors 6a, 6b for measuring the voltage at the ends of the clutch cycling switch. The device is supplied by the battery of the car through the connector cable 17 and clamps 17a, 17b (figure 4). Keyboard 8, display 8a, printer 8b; connector 8c for communicating with the computer 11 (figure 4) as well as memory card 9 are shown.

In figures from 5 to 7 the application is shown of the device according to the invention to three types of conditioning circuits, and respectively expansion valve system, orifice tube system with clutch cycling switch and orifice tube system without clutch cycling switch.

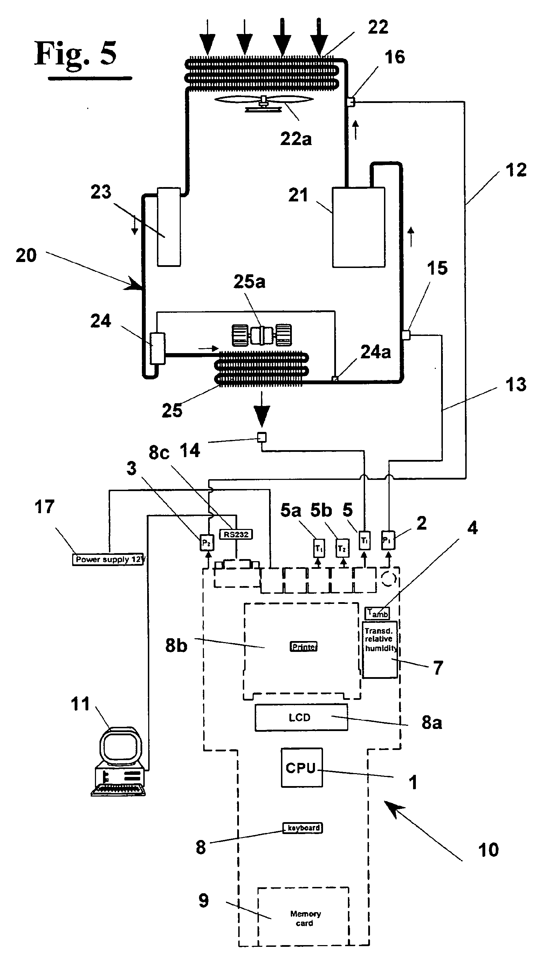

In common the three systems, indicated with 20, 20' and 20'' respectively, have compressor 21, a warm exchanger or condenser 22 with a relative fan 22a, an expansion valve 26, which in the apparatus 20 of figure 5 is a thermostatic valve 24, as well as an evaporator or cool exchanger 25 with a relative fan 25a.

In particular, the expansion valve system 20 of figure 5 has a filter 23 and a thermostatic valve 24 that adjusts the flow through a capillary valve responsive to the temperature of the refrigerant fluid measured downstream evaporator 25. This way it is possible to adjust the flow rate of the fluid and then the outlet temperature at the evaporator according to the regime of operation of the engine of the car.

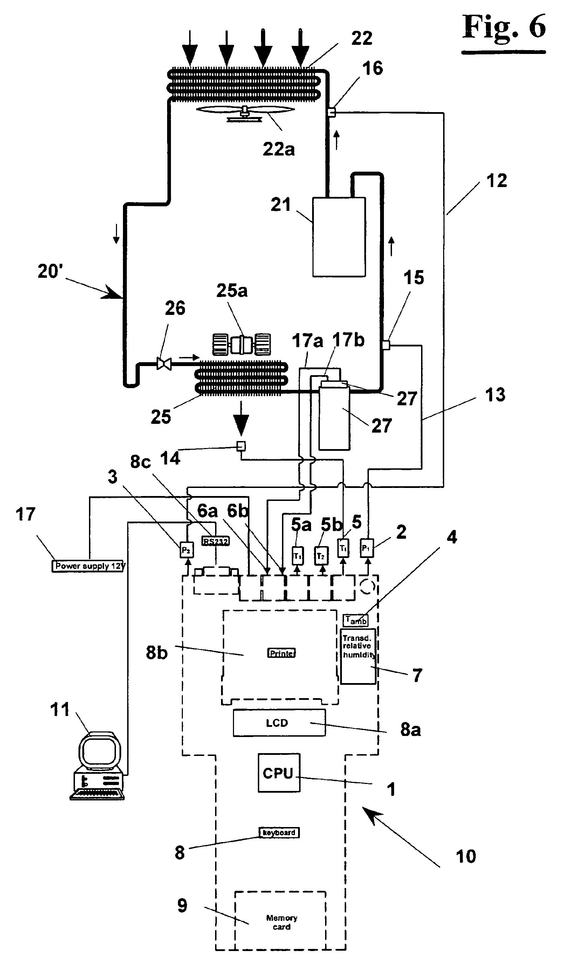

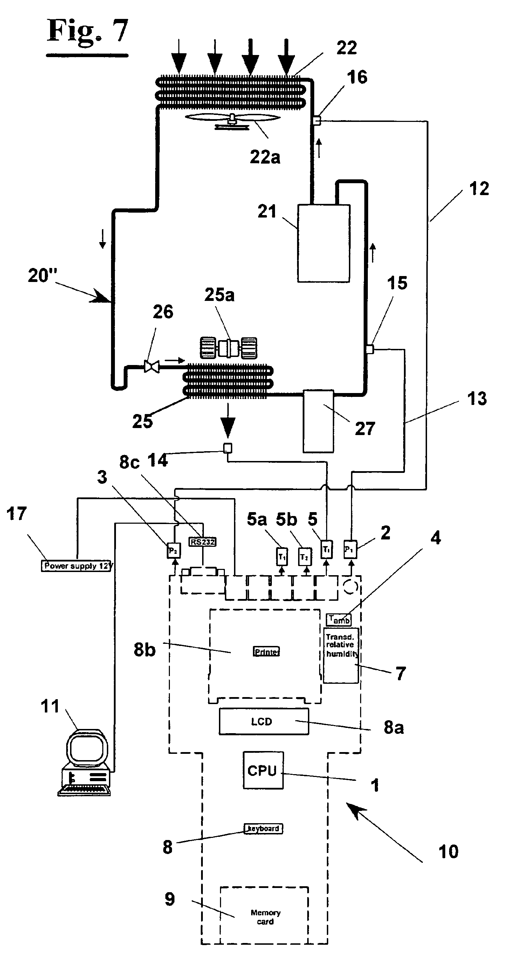

Orifice tube systems with or without clutch cycling switch 20' and 20'' of figures 6 and 7 have instead a not adjustable capillary valve 26 and a liquid receiver 27, for compensating the presence of fluid at the liquid state at the outlet of the evaporator. In certain cases variable displacement compressors are used for adjusting the flow rate.

The operation of the device according to the invention is described as follows, with reference to all the three systems 20, 20', 20'' of figures 5, 6 and 7.

Once connected the sensors of pressure 2,3 to the conditioning system by means of swift fittings 15 and 16, a sensor 14 is positioned for measuring the temperature at the air outlet in the car, cabled to connector 5 of input of the air temperature at the evaporator. In the case of orifice tube system with clutch cycling switch (figure 6) two connectors 6a and 6b are plugged at the ends of the clutch cycling switch 27a present on liquid variator 27.

Then the program of diagnosis residing in the memory of the microprocessor is started.

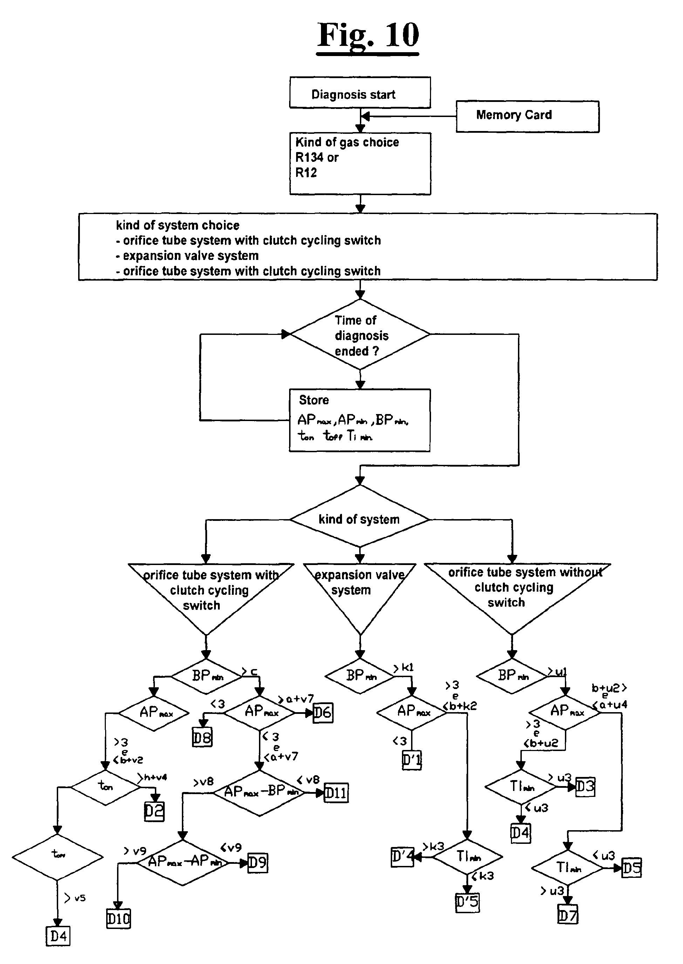

With reference to figure 10, wherein a portion is shown of the flow-sheet of a preferred embodiment of the program, the method of diagnosis according to the invention provides the step of storing preliminarily in the memory of the microprocessor the minimum and maximum values HPₘᵢₙ, HPₘₐₓ of the pressure determined at 16 in the high pressure side and the minimum value of the pressure LPₘᵢₙ determined in 15 in the low pressure side, as well as the minimum value of temperature Tiₘᵢₙ at the air outlet in the car measured at 14 responsive to the environment temperature Ta, measured at 4 in normal operative conditions of the apparatus. In the case of a orifice tube system with clutch cycling switch 20' also the value of the average time tₒₙ of operation of the compressor of the apparatus and the average time t_{off} of disconnection of the compressor are previously stored responsive to the environment temperature Ta in normal conditions of operation of the apparatus. Through keyboard 8 then the type of refrigerant used, R12 or R134a, and the type of conditioning system, traditional (expansion valve), orifice tube system with or without clutch cycling switch, are put in.

It is apparent that, in the case of use of the memory card 9, the selection of the type of gas and of the type of apparatus can be done automatically on the basis of previously stored data on the card.

The device proceeds, then, for a predetermined time of diagnosis t, for example 120 sec, sampling the values of: environment temperature Ta (diagnosis beginning value), temperature Ti at the air outlet in the car, pressure values HP and LP on the high and low pressure sides. The sampling time is typically 500 msec.

According to the invention, the present method of diagnosis provides the determination of the following values:
- starting value Ta of the environment temperature
- minimum value of pressure LPₘᵢₙ determined in the low pressure side in the time of diagnosis;
- minimum value of pressure HPₘᵢₙ determined in the low pressure side in the time of diagnosis;
- maximum value of pressure HPₘₐₓ determined in the high pressure side in the time of diagnosis;
- minimum value of the temperature Tiₘᵢₙ determined at the air outlet in the car in the time of diagnosis;

In the case of apparatus of the type orifice tube system with clutch cycling switch the following parameters are furthermore determined:
- Average time of operation tₒₙ at the electromagnetic coupling of the compressor of the apparatus;
- Average time of disconnection t_{off} at the electromagnetic coupling of the compressor in the apparatus.

These average times are determined by means of the connectors 6a, 6b and are calculated in the following way: $ton = \frac{Σ time of operation at the electromagnetic coupling of the compressor}{n . of cycles}$ $toft = \frac{Σ time of disconnection at the electromagnetic coupling of the compressor}{n . of cycles}$

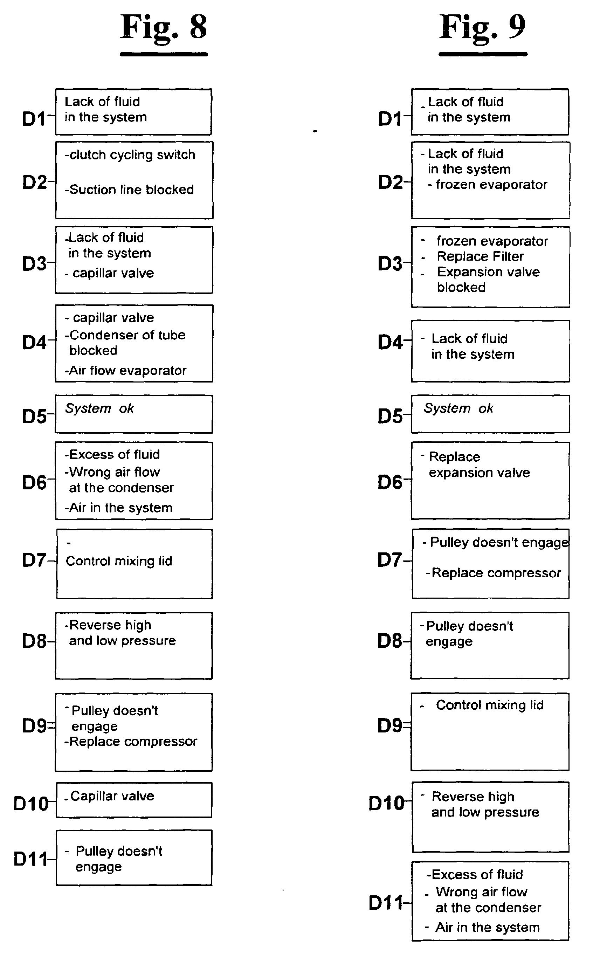

On the basis of the determined values (Ta, LPₘᵢₙ, HPₘᵢₙ, HPₘₐₓ, Tiₘᵢₙ and, in the case of orifice tube system with clutch cycling switch, also tₒₙ and t_{off}) and of the reference values previously stored or extracted from the memory card (APₘₐₓ, HPₘᵢₙ, LPₘᵢₙ, Tiₘᵢₙ and in the case of orifice tube system with clutch cycling switch, also tₒₙ and t_{off}), then the selection by the processor is possible of a diagnosis message chosen from a predefined list stored in the memory of the microprocessor same. In figures 8 and 9 some possible examples are shown of diagnosis messages D1-D11 respectively for orifice tube systems with or without clutch cycling switch and expansion valve systems.

With reference again to figure 10, the comparison is then made of the following values LPₘᵢₙ, HPₘₐₓ, HPₘₐₓ-APₘᵢₙ, HPₘₐₓ-BPₘᵢₙ; Tiₘᵢₙ or, in the case of orifice tube system with clutch cycling switch of LPₘᵢₙ, HPₘₐₓ, HPₘₐₓ-APₘᵢₙ, HPₘₐₓ-BPₘᵢₙ; Tiₘᵢₙ, tₒₙ, t_{off}, with a set of reference parameters. Then, the transmission is done of messages D₁, D₂, ... D₁ respectively of figures 9 and 8, according to predetermined sequences of conditions wherein said values overcome or are less than said parameters. The parameters have been indicated in figure 10 as:
- parameters a, b, g, and h, that pertain to the environment temperature Ta and to the type of refrigerant used, such as R12 or R134a;
- parameter c, that pertain to the type of refrigerant used, such as R12 or R134a;
- parameters v0, ...v9, that are used with an orifice tube system with clutch cycling switch;
- parameters u0, ...u6, that are referred to an orifice tube system without clutch cycling switch;
- parameters k0, ...k6, that pertain to an expansion valve system.

Parameters v0, ... .v9, u0, ... .u6 and k0, ...k6 are used selectively to consider the difference of the trend of the pressure between the three types of conditioning systems described above and to change selectively the parameters used in the diagnosis for each type of car that are stored in the memory card.

The above device allows to execute the test and the diagnosis of any conditioning system of cars.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for testing and diagnosing air-conditioning apparatus on vehicles, said systems comprising a high pressure side with a condenser, a low pressure side with an evaporator through which cool air is created, said sides being respectively downstream and upstream of a compressor, comprising the steps of:
- measuring the pressure value HP on the high pressure side;
- measuring the pressure value LP on the low pressure side;
- measuring the environment temperature value Ta
**characterised in that** it comprises the further steps of:
- measuring the temperature value Ti of the air coming from the evaporator;
- for a predetermined time of diagnosis t, sampling the values of the pressures (HP, LP) and of the temperatures (Ta and Ti) and storing said values in a computing unit wherein a program of diagnosis is residing;
- running the program of diagnosis on the basis of the values stored and displaying messages of diagnosis responsive to the values measured.

2. Method according to claim 1 wherein, within a diagnosis time t:
- said measuring step of the pressure HP on the high pressure side provides a measure of the maximum and minimum values of the pressure HPₘₐₓ and HPₘᵢₙ;
- said measuring step of the pressure LP on the low pressure side provides a measure of the minimum value of the pressure LPₘᵢₙ;
- said measuring step of the temperature Ti of the air coming from the evaporator provides a measure of the minimum temperature value Tiₘᵢₙ.

3. Method according to claim 1, wherein in the case of orifice tube system with clutch cycling switch the values are previously measured of the average time tₒₙ of operation of the compressor of the apparatus and the average time t_{off} of disconnection of the compressor responsive to the environment temperature (Ta) in normal conditions of operation of the apparatus.

4. Method according to claim 1, wherein before running said program of diagnosis an input step is provided of parameters of the conditioning apparatus pertaining to:
- type of refrigerant used, chosen between R12 or R134a,
- type of conditioning system present, chosen among traditional (expansion valve system), orifice tube system with clutch cycling switch, orifice tube system without clutch cycling switch.

5. Method according to claim 1, wherein said input step is executed by means of an insertable magnetic support on which said parameters of the circuit have been previously stored.

6. Method according to claim 2 or 3, wherein said program of diagnosis comprises the following steps:
- Input of the data of the conditioning apparatus,
- Start counter of the time of diagnosis,
- Detection, in the time of diagnosis, of the values of HPₘᵢₙ; HPₘₐₓ; LPₘᵢₙ; Tiₘᵢₙ; and, in the case of orifice tube systems with clutch cycling switch, also of tₒₙ and t_{off};
- Comparison of the following values LPₘᵢₙ, HPₘₐₓ, HPₘₐₓ-APₘᵢₙ, HPₘₐₓ-BPₘᵢₙ; Tiₘᵢₙ, or, in the case of orifice tube systems with clutch cycling switch of LPₘᵢₙ, HPₘₐₓ, HPₘₐₓ-APₘᵢₙ, HPₘₐₓ-BPₘᵢₙ; Tiₘᵢₙ, tₒₙ, t_{off}, with a set of parameters of reference, and transmission of messages D₁, D₂, ... according to predetermined sequences of conditions wherein said values overcome or are less than said parameters.

7. A device for testing and diagnosing air-conditioning apparatus on vehicles, said systems comprising a high pressure side with a condenser, a low pressure side with an evaporator from which cool air is created, said sides being respectively downstream and upstream of a compressor, comprising:
- means for measuring the pressure HP on the high pressure side;
- means for measuring the pressure LP on the low pressure side;
- means for measuring the environment temperature Ta
**characterised in that** it comprises:
- means for measuring the temperature Ti of the air coming from the evaporator;
- a microprocessor computing unit, operatively connected with said means for measuring, for storing the values of the pressures (AP,BP) and of the temperature (Ta and Ti) measured in a predetermined range of time (t) from said means for measuring, in said unit a program residing of diagnosis suitable for being run on the basis of the stored values;
- means for producing diagnosis messages calculated by said program responsive to the measured values.

8. Device according to claim 7 wherein in the case of orifice tube system with clutch cycling switch means are provided for measuring the average time tₒₙ of operation of the compressor of the apparatus and of the average time t_{off} of disconnection of the compressor responsive to the environment temperature (Ta) in normal conditions of operation of the apparatus.

9. Device according to claim 7, wherein means are provided for the input of parameters of the conditioning apparatus, among which:
- type of refrigerant used, chosen between R12 or R134a,
- type of conditioning system present, chosen among traditional system (expansion valve system), orifice tube system with or without clutch cycling switch or orifice tube system without clutch cycling switch.

10. Device according to claim 9, wherein said means for input comprise an insertable magnetic support on which said parameters of the circuit have been previously stored, said device providing means for reading said magnetic support connected to said microprocessor computing unit.

## Patentansprüche

1. Verfahren zum Testen und Diagnostizieren einer Klimaanlage in Fahrzeugen, wobei die Systeme eine Hochdruckseite mit einem Kondensator und eine Niederdruckseite mit einem Verdampfer, durch den Kühlluft erzeugt wird, umfasst, wobei die Seiten jeweils stromab und stromauf eines Kompressors liegen, mit den folgenden Schritten:
- Messen des Druckwerts HP auf der Hochdruckseite,
- Messen des Druckwerts LP auf der Niederdruckseite,
- Messen des Umgebungstemperaturwerts Ta,
**dadurch gekennzeichnet, dass** es ferner folgende Schritte umfasst:
- Messen des Temperaturwerts Ti der von dem Verdampfer kommenden Luft,
- für eine vorbestimmte Diagnosezeit t, Abtasten der Werte der Drücke (HP,LP) und der Temperaturen (Ta und Ti) und Speichern der Werte in einer Recheneinheit, in der ein Diagnoseprogramm enthalten ist,
- Ablaufenlassen des Diagnoseprogramms auf der Basis der gespeicherten Werte und Anzeigen von Diagnosemittelungen, als Antwort auf die gemessenen Werte.

2. Verfahren nach Anspruch 1, wobei innerhalb einer Diagnosezeit t:
- der Messschritt des Drucks HP auf der Hochdruckseite einen Messwert der Maximal- und Minimalwerte des Drucks HPₘₐₓ und HPₘᵢₙ liefert,
- der Messschritt des Drucks LP auf der Niederdruckseite einen Messwert des Minimalwerts des Drucks LPₘᵢₙ liefert,
- der Messschritt der Temperatur Ti der von dem Verdampfer kommenden Luft einen Messwert des Minimal-Temperaturwerts Tiₘᵢₙ liefert.

3. Verfahren nach Anspruch 1, wobei im Fall eines offenen Rohrsystems (orifice tube system) mit einem Kupplungs-Zyklusschalter vorab die Werte der Durchschnittszeit tₒₙ des Betriebs des Kompressors der Vorrichtung und die Durchschnittszeit t_{off} der Verbindungstrennung des Kompressors in Reaktion auf die Umgebungstemperatur (Ta) unter normalen Betriebsbedingungen der Vorrichtung gemessen werden.

4. Verfahren nach Anspruch 1, wobei vor dem Ablaufenlassen des Diagnoseprogramms ein Eingabeschritt von Parametern der Klimaanlage vorgesehen wird, die sich beziehen auf:
- Art des verwendeten Kältemittels, das zwischen R12 oder R134a ausgewählt wird,
- Art der vorhandenen Klimaanlage, die unter einer herkömmlichen (Expansionsventilsystem), einem offenen Rohrsystem mit einem Kupplungs-Zyklusschalter und einem offenen Rohrsystem ohne Kupplungs-Zyklusschalter ausgewählt wird.

5. Verfahren nach Anspruch 1, wobei der Eingabeschritt mittels eines einführbaren magnetischen Trägers ausgeführt wird, auf dem die Parameter der Schaltung vorab gespeichert wurden.

6. Verfahren nach Anspruch 2 oder 3, wobei das Diagnoseprogramm die folgenden Schritte umfasst:
- Eingeben der Daten der Klimaanlage,
- Starten der Diagnosezeit-Zählung,
- Erfassen, während der Diagnosezeit, der Werte von HPₘᵢₙ, HPₘₐₓ, LPₘᵢₙ, Tiₘᵢₙ und, im Fall eines offenen Rohrsystems mit Kupplungs-Zyklusschalter, auch von tₒₙ und t_{off},
- Vergleichen der folgenden Werte LPₘᵢₙ, HPₘₐₓ, HPₘₐₓ-APₘᵢₙ, HPₘₐₓ-BPₘᵢₙ, Tiₘᵢₙ oder, im Fall eines offenen Rohrsystems mit Kupplungs-Zyklusschalter, auch von LPₘᵢₙ, HPₘₐₓ, HPₘₐₓ-APₘᵢₙ, HPₘₐₓ-BPₘᵢₙ, Tiₘᵢₙ, tₒₙ, t_{off}, mit einem Satz von Bezugsparametern, und Übertragen der Nachrichten D₁,D₂, ... entsprechend vorbestimmten Bestimmungssequenzen, wobei die Werte über oder unter den Parametern liegen.

7. Gerät zum Testen und Diagnostizieren einer Klimaanlage in Fahrzeugen, wobei die Systeme eine Hochdruckseite mit einem Kondensator und eine Niederdruckseite mit einem Verdampfer, von dem Kühlluft erzeugt wird, umfassen, wobei die Seiten jeweils stromab und stromauf eines Kompressors liegen, mit:
- einem Mittel zum Messen des Drucks HP auf der Hochdruckseite,
- einem Mittel zum Messen des Drucks LP auf der Niederdruckseite,
- einem Mittel zum Messen der Umgebungstemperatur Ta,
**dadurch gekennzeichnet, dass** es umfasst:
- ein Mittel zum Messen des Temperatur Ti der von dem Verdampfer kommenden Luft,
- eine Mikroprozessor-Recheneinheit, die funktionsmäßig mit dem Messmittel verbunden ist, zum Speichern der Werte der Drücke (AP,BP) und der Temperatur (Ta und Ti), gemessen in einer vorbestimmten Zeitspanne (t) von dem Messmittel, wobei die Einheit ein Diagnoseprogramm enthält, das geeignet ist, auf der Basis der gespeicherten Werte abzulaufen,
- ein Mittel zum Erzeugen von Diagnosemittelungen, die von dem Programm als Antwort auf die Messwerte berechnet werden.

8. Vorrichtung nach Anspruch 7, wobei im Fall eines offenen Rohrsystems mit Kupplungs-Zyklusschalter Mittel zum Messen der Durchschnittszeit tₒₙ des Betriebs des Kompressors der Vorrichtung sowie der Durchschnittszeit t_{off} der Verbindungstrennung des Kompressors in Reaktion auf die Umgebungstemperatur (Tₐ) unter normalen Betriebsbedingungen der Vorrichtung vorgesehen sind.

9. Gerät nach Anspruch 7, wobei Mittel für die Eingabe von Parametern der Klimaanlage vorgesehen sind, wie z.B.:
- Art des verwendeten Kältemittels, das zwischen R12 oder R134a ausgewählt ist,
- Art der vorhandenen Klimaanlage, die unter einem herkömmlichen System (Expansionsventilsystem), einem offenen Rohrsystem mit oder ohne Kupplungs-Zyklusschalter oder einem offenen Rohrsystem ohne Kupplungs-Zyklusschalter ausgewählt ist.

10. Gerät nach Anspruch 9, wobei das Eingabemittel einen einsetzbaren magnetischen Träger umfasst, auf dem die Parameter der Schaltung vorab gespeichert wurden, wobei das Gerät Mittel zum Lesen des magnetischen Trägers hat, die mit der Mikroprozessor-Recheneinheit verbunden sind.

## Revendications

1. Procédé pour tester et diagnostiquer un dispositif de climatisation pour véhicules, lesdits systèmes comprenant un côté haute pression avec un condensateur, un côté basse pression avec un évaporateur à travers lequel de l'air frais est créé, lesdits côtés étant situés respectivement en aval et en amont d'un compresseur, comprenant les étapes suivantes :
- mesurer la valeur de pression HP du côté haute pression ;
- mesurer la valeur de pression LP du côté basse pression ;
- mesurer la valeur de température environnante Ta
**caractérisé en ce qu'**il comprend en outre les étapes suivantes :
- mesurer la valeur de température Ti de l'air entrant depuis l'évaporateur ;
- pendant un temps prédéterminé de diagnostic t, sélectionner un échantillon de valeurs de pression (HP, LP) et de températures (Ta et Ti) et stocker lesdites valeurs dans une unité de calcul dans laquelle un programme de diagnostic est installé ;
- exécuter le programme de diagnostic sur la base des valeurs stockées et afficher les messages de diagnostic en réponse aux valeurs mesurées.

2. Procédé selon la revendication 1, dans lequel, pendant un temps de diagnostic t :
- ladite étape de mesure de la pression HP du côté haute pression permet d'obtenir une mesure des valeurs maximale et minimale de la pression HPₘₐₓ et HPₘᵢₙ;
- ladite étape de mesure de la pression LP du côté basse pression permet d'obtenir une mesure de la valeur minimale de la pression LPₘᵢₙ ;
- ladite étape de mesure de la température Ti de l'air entrant depuis l'évaporateur permet d'obtenir une mesure de la valeur de température minimale Tiₘᵢₙ.

3. Procédé selon la revendication 1, dans lequel dans le cas d'un système de tube à orifice avec un interrupteur de cycle d'embrayage, les valeurs du temps moyen tₒₙ du fonctionnement du compresseur du dispositif et du temps moyen t_{off} de déconnexion du compresseur en réponse à la température environnante (Ta) sont mesurées au préalable dans un état de fonctionnement normal du dispositif.

4. Procédé selon la revendication 1, dans lequel avant l'exécution dudit programme de diagnostic, est prévue une étape d'entrée de paramètres du dispositif de climatisation concernant :
- le type de réfrigérant utilisé, choisi parmi le R12 et le R134a,
- le type de système de climatisation présent, choisi parmi le système traditionnel (système de vanne de détente), le système de tube à orifice avec un interrupteur de cycle d'embrayage, et le système de tube à orifice sans interrupteur de cycle d'embrayage.

5. Procédé selon la revendication 1, dans lequel ladite étape d'entrée est exécutée au moyen d'un support magnétique d'insertion sur lequel lesdits paramètres du circuit ont été stockés au préalable.

6. Procédé selon la revendication 2 ou 3, dans lequel ledit programme de diagnostic comprend les étapes suivantes :
- entrée des données du dispositif de climatisation,
- démarrage du compteur pour le temps de diagnostic,
- détection, pendant le temps de diagnostic, des valeurs de HPₘᵢₙ ; HPₘₐₓ ; LPₘᵢₙ ; Tiₘᵢₙ ; et dans le cas de systèmes de tube à orifice avec un interrupteur de cycle d'embrayage également de tₒₙ et t_{off} ;
- comparaison des valeurs suivantes LPₘᵢₙ, HPₘₐₓ, HPₘₐₓ-APmin, HPₘₐₓ-BPₘᵢₙ ; Tiₘᵢₙ, ou dans le cas de systèmes de tube à orifice avec un interrupteur de cycle d'embrayage de LPₘᵢₙ, HPₘₐₓ, HPₘₐₓ-APₘᵢₙ, HPₘₐₓ-BPₘᵢₙ ; Tiₘᵢₙ, tₒₙ, t_{off}, avec un ensemble de paramètres de référence, et transmission de messages D₁, D2, ... selon des séquences prédéterminées d'états dans lesquels lesdites valeurs dépassent ou sont inférieures auxdits paramètres.

7. Dispositif pour tester et diagnostiquer un dispositif de climatisation pour véhicules, lesdits systèmes comprenant un côté haute pression avec un condensateur, un côté basse pression avec un évaporateur depuis lequel de l'air frais est créé, lesdits côtés étant situés respectivement en aval et en amont d'un compresseur, comprenant :
- des moyens pour mesurer la pression HP du côté haute pression ;
- des moyens pour mesurer la pression LP du côté basse pression ;
- des moyens pour mesurer la température environnante Ta
**caractérisé en ce qu'**il comprend en outre :
- des moyens pour mesurer la température Ti de l'air entrant depuis l'évaporateur ;
- une unité de calcul de microprocesseur, connectée de manière opérationnelle auxdits moyens de mesure, pour stocker les valeurs des pressions (AP, BP) et de la température (Ta et Ti) mesurées pendant un intervalle de temps prédéterminé (t) en provenance desdits moyens de mesure, ladite unité contenant un programme de diagnostic approprié pour être exécuté sur la base des valeurs stockées ;
- des moyens pour produire des messages de diagnostic calculés par ledit programme en réponse aux valeurs mesurées.

8. Dispositif selon la revendication 7, dans lequel dans le cas d'un système de tube à orifice avec un interrupteur de cycle d'embrayage, des moyens sont prévus pour mesurer le temps moyen tₒₙ de fonctionnement du compresseur du dispositif et le temps moyen t_{off} de déconnexion du compresseur en réponse à la température environnante (Ta) dans des états de fonctionnement normal du dispositif.

9. Dispositif selon la revendication 7, dans lequel des moyens sont prévus pour l'entrée de paramètres du dispositif de climatisation, parmi lesquels :
- le type de réfrigérant utilisé, choisi entre le R12 et le R134a,
- le type de système de climatisation présent, choisi parmi le système traditionnel (système de vanne de détente), le système de tube à orifice avec ou sans interrupteur de cycle d'embrayage, ou le système de tube à orifice sans interrupteur de cycle d'embrayage.

10. Dispositif selon la revendication 9, dans lequel lesdits moyens d'entrée comprennent un support magnétique d'insertion sur lequel lesdits paramètres du circuit ont été stockés au préalable, ledit dispositif fournissant des moyens pour lire ledit support magnétique connecté à ladite unité de calcul de microprocesseur.
